# EUROPÄISCHE PATENTSCHRIFT

(11) **EP 1 230 317 B1**
(45) Veröffentlichungstag und Bekanntmachung des Hinweises auf die Patenterteilung: **16.02.2005**
(21) Anmeldenummer: 00972820.5
(22) Anmeldetag: 20.10.2000
(51) Int. Cl.: C09K 5/20, C23F 11/10

(54) **GEFRIERSCHUTZMITTELKONZENTRATE AUF BASIS VON DICARBONSÄUREN, MOLYBDAT UND TRIAZOLEN UND DIESE UMFASSENDE KÜHLMITTELZUSAMMENSETZUNGEN**
ANTIFREEZE CONCENTRATES ON THE BASIS OF DICARBOXYLIC ACIDS, MOLYBDATE AND TRIAZOLES AND COOLANT COMPOSITIONS CONTAINING THESE CONCENTRATES
AGENTS ANTIGEL CONCENTRES A BASE D'ACIDES DICARBOXYLIQUES, DE MOLYBDATE ET DE TRIAZOLS ET COMPOSITIONS D'AGENTS REFRIGERANTS LES CONTENANT

(30) Priorität: 29.10.1999 DE 19952482; 18.11.1999 DE 19955704
(43) Veröffentlichungstag der Anmeldung: 14.08.2002
(73) Patentinhaber: BASF AKTIENGESELLSCHAFT, 67056 Ludwigshafen (DE)
(72) Erfinder: WENDEROTH, Bernd, 69488 Birkenau (DE); STRAUSS, Ralf, 67061 Ludwigshafen (DE); LONCHAMPT, Jacques, F-25200 Montbeliard (FR)
(86) Internationale Anmeldenummer: PCT/EP2000/010335
(87) Internationale Veröffentlichungsnummer: WO 2001/032801

(56) Entgegenhaltungen:
- EP-A- 0 369 100
- EP-A- 0 552 988
- EP-A- 0 739 965
- EP-A- 0 739 966
- DE-A- 19 547 499
- FR-A- 2 733 511
- GB-A- 2 138 837
- US-A- 5 422 026

## Beschreibung

Die vorliegenden Erfindung betrifft neue Gefrierschutzmittelkonzentrate auf Basis einer Mischung aus mindestens zwei verschiedenen Dicarbonsäuren, Molybdat und einer Mischung aus mindestens zwei verschiedenen Triazolen oder Thiazolen. Weiterhin betrifft die Erfindung gebrauchsfertige wäßrige Kühlmittelzusammensetzungen, welche die genannten Gefrierschutzmittelkonzentrate umfassen.

Kühlerschutzmittel für die Kühlkreisläufe von Verbrennungsmotoren, beispielsweise in Automobilen, enthalten meist Alkylenglykole, vor allem Ethylenglykol oder Propylenglykol, als Hauptkomponente. Zur Verwendung im Kühlsystem werden sie mit Wasser verdünnt und sollen neben Frostschutz auch für eine gute Wärmeabfuhr sorgen. Alkylenglykol/Wasser-Mischungen sind allerdings bei den Betriebstemperaturen von Verbrennungsmotoren sehr korrosiv, deswegen müssen die unterschiedlichen Metalle wie beispielsweise Kupfer, Messing, Eisen, Stahl, Gußeisen (Grauguß), Blei, Zinn, Chrom, Zink, Aluminium, Magnesium und deren Legierungen sowie Lötmetalle wie beispielsweise Lötzinn (Weichlot), die im Kühlsystem vorkommen können, ausreichend vor den verschiedensten Korrosionsarten, z. B. Lochfraßkorrosion, Spaltkorrosion, Erosion oder Kavitation, geschützt werden. Zur Verwendung als Korrosions-inhibitoren in derartigen Kühlsystemen sind im Stand der Technik bereits eine Vielzahl chemischer Individuen bekannt.

Gefrierschutzmittel auf Basis von Ethylenglykol, die Carbonsäuren, Alkalimetallmolybdat und Triazole bzw. Thiazole enthalten, sind aus der EP-B 552 988 (1), der DE-A 34 13 416 (2), der US-A 4 561 990 (3) und der DE-A 195 47 499 (4) bekannt.

Die Betriebsbedingungen in modernen Verbrennungsmotoren stellen heute bezüglich Temperaturbelastung an den Wärmeübertragungsflächen, Druck und Fließgeschwindigkeit sowie der Werkstoffauswahl sehr viel höhere Ansprüche an das Korrosionsschutzvermögen und insbesondere die Hochtemperatur-Stabilität des Kühlmittels als früher. Die bekannten Mittel des Standes der Technik sind in dieser Hinsicht noch verbesserungsbedürftig.

Aufgabe der vorliegenden Erfindung war es daher, entsprechende Gefrierschutzmittelkonzentrate bereitszustellen, die die Nachteile des Standes der Technik nicht mehr aufweisen.

Demgemäß wurden Gefrierschutzmittelkonzentrate auf Basis von Alkylenglykolen oder deren Derivaten, welche
(a) 0,05 bis 10 Gew.-%, vorzugsweise 0,1 bis 5 Gew.-%, bezogen auf die Gesamtmenge des Konzentrates, einer Mischung aus mindestens zwei verschiedenen Dicarbonsäuren mit jeweils 3 bis 16 C-Atomen in Form deren Alkalimetall-, Ammonium- oder substituierten Ammoniumsalze, oder für dem Fall einer Mischung aus zwei verschiedenen gesättigten, aliphatischen Dicarbonsäuren mit jeweils 3 bis 16 C-Atomen, deren Imide,
(b) 0,01 bis 5 Gew.-%, vorzugsweise 0,05 bis 2 Gew.-%, bezogen auf die Gesamtmenge des Konzentrates, eines oder mehrerer Alkalimetall-, Ammonium- oder substituierter Ammoniummolybdate und
(c) 0,01 bis 3 Gew.-%, vorzugsweise 0,05 bis 1 Gew.-%, bezogen auf die Gesamtmenge des Konzentrates, einer Mischung aus zwei verschiedenen Korrosionsinhibitoren ausgewählt aus der Gruppe der Kohlenwasserstofftriazole
enthalten, gefunden.

Der erfindungsgemäßen Gefrierschutzmittelkonzentrate können überall dort eingesetzt werden, wo der Frostschutz von Wasser enthaltenden Anlagen (in der Regel für den Bereich von 0°C bis -40°C, insbesondere -20°C bis -35°C) und gleichzeitig der Korrosionsschutz von Metallgehäusen von Wasser enhaltenden Behältern sichergestellt werden sollen. Hier sind vor allem die Kühlkreisläufe von Verbrennungsmotoren, insbesondere in Automobilen wie Personenkraftwagen und Lastkraftwagen, von Interesse. Die erfindungsgemäßen Gefrierschutzmittelkonzentrate können aber auch zu dem genannten Zweck in Standmotoren, in Warmwasserkreisläufen von Zentralheizungen, in durch elektrische Widerstände beheizten Radiatoren oder in Solarheizstromkreisen eingesetzt werden.

In einer bevorzugten Ausführungsform stellt die Komponente (a) eine Mischung aus zwei verschiedenen gesättigten aliphatischen Dicarbonsäuren mit jeweils 3 bis 16 C-Atomen, vorzugsweise mit jeweils 4 bis 12 C-Atomen, dar.

Typische Beispiele für derartige Dicarbonsäuren sind Malonsäure, Bernsteinsäure, Glutarsäure, Adipinsäure, Pimelinsäure, Korksäure (Suberinsäure), Azelainsäure, Sebacinsäure, Undecandisäure,

Dodecandisäure, Dicyclopentadiendicarbonsäure, Phthalsäure und Terephthalsäure. Auch entsprechende Imide, z. B. Succinimid, können hier zum Einsatz kommen.

Besonders bevorzugt wird für die Komponente (a) eine Mischung aus Bernsteinsäure und Sebacinsäure.

In einer weiteren bevorzugten Ausführungsform stellt die Komponente (c) eine Mischung aus zwei verschiedenen Kohlenwasserstofftriazolen, inbesondere aus Benzotriazol und Tolutriazol, dar.

In einer weiteren bevorzugten Ausführungsform enthalten die erfindungsgemäßen Gefrierschutzmittelkonzentrate zusätzlich
(d) 0,05 bis 5 Gew.-%, vorzugsweise 0,1 bis 3 Gew.-%, bezogen auf die Gesamtmenge des Konzentrates, einer oder mehrerer aliphatische oder aromatische Monocarbonsäuren mit jeweils 5 bis 18 C-Atomen in Form deren Alkalimetall-, Ammonium- oder substituierten Ammoniumsalze.

Als derartige lineare oder verzweigtkettige aliphatische Monocarbonsäuren kommen beispielsweise Pentansäure, Hexansäure, Octansäure, 2-Ethylhexansäure, Nonansäure, Decansäure, Undecansäure, Dodecansäure oder Linolensäure in Betracht.

Als derartige aromatische Monocarbonsäuren eignet sich insbesondere Benzoesäure, daneben kommen auch auch beispielsweise C₁-bis C₈-Alkylbenzoesäuren wie o-, m- oder p-Methylbenzoesäure oder p-tert.-Butylbenzoesäure sowie hydroxylgruppenhaltige aromatische Monocarbonsäuren wie o-, m- oder p-Hydroxybenzoesäure oder o-, m- oder p-(Hydroxymethyl)benzoesäure in Betracht.

Als Komponente (d) werden gegebenenfalls hydroxylgruppenhaltige aromatische Monocarbonsäuren mit 6 bis 10 C-Atomen besonders bevorzugt.

Alle genannten Carbonsäuren liegen als Alkalimetallsalze, vor allem als Natrium- oder Kaliumsalze, als Ammoniumsalze oder substituierte Ammoniumsalze (Aminsalze) vor, z. B. mit Trialkylaminen oder Trialkanolaminen.

Weiterhin können die erfindungsgemäßen Gefrierschutzmittelkonzentrate zusätzlich einen oder mehrere Korrosionsinhibitoren ausgewählt aus der Gruppe der Alkalimetallborate, Alkalimetallphosphate, Alkalimetallchromate, Alkalimetallsilikate, Alkalimetallnitrite, Alkalimetallnitrate und des Magnesiumnitrates in Mengen von jeweils bis zu 1 Gew.-%, insbesondere 0,01 bis 0,8 Gew.-%, bezogen auf die Gesamtmenge des Konzentrates, enthalten.

Beispiele für derartige zusätzliche Korrosionsinhibitoren sind Natriumtetraborat (Borax), Dinatriumhydrogenphosphat, Trinatriumphosphat, Natriummetasilikat, Natriumnitrit und Natriumnitrat.

Bei Mitverwendung von Alkalimetallsilikaten werden diese zweckmäßigerweise durch übliche Organosilicosulfonate in üblichen Mengen stabilisiert.

Zusätzlich zu den genannten Inhibitorkomponenten können beispielsweise auch noch lösliche Salze des Magnesiums von organischen Säuren, z. B. Magnesiumbenzolsulfonat, Magnesiummethansulfonat, Magnesiumacetat oder Magnesiumpropionat, Hydrocarbazole oder quaternierte Imidazole, wie sie in der DE-A 196 05 509 beschrieben sind, in üblichen Mengen als weitere Inhibitoren eingesetzt werden.

Weiterhin können die erfindungsgemäßen Gefrierschutzmittelkonzentrate zusätzlich bis zu 1 Gew.-%, insbesondere 0,01 bis 0,5 Gew.-%, bezogen auf die Gesamtmenge des Konzentrates, Hartwasserstabilisatoren auf Basis von Polyacrylsäure, Polymaleinsäure, Acrylsäure-Maleinsäure-Copolymeren, Polyvinylpyrrolidon, Polyvinylimidazol, Vinylpyrrolidon-Vinylimidazol-Copolymeren und/oder Copolymeren aus ungesättigten Carbonsäuren und Olefinen enthalten.

Als Hartwasserstabilisatoren oder Sequestrierungsmittel können aber auch niedermolekulare Verbindungen, beispielsweise Polycarbonsäuren wie 2-Phosphonobutan-1,2,4-tricarbonsäure, eingesetzt werden.

Der pH-Wert der erfindungsgemäßen Gefrierschutzmittelkonzentrate liegt üblicherweise im Bereich von 6 bis 11, vorzugsweise 7 bis 10, insbesondere 7,5 bis 9, vor allem 7,5 bis 8,3. Dabei wird der gewünschte pH-Wert in der Regel durch Zugabe von Alkalimetallhydroxid, Ammoniak oder Aminen zur Formulierung eingestellt, festes Natrium- oder Kaliumhydroxid sowie wäßrige Natron- oder Kalilauge sind hierfür besonders geeignet. Mitzuverwendende Carbonsäuren werden zweckmäßigerweise gleich als entsprechende Alkalimetallsalze zugegeben, um automatisch im gewünschten pH-Bereich zu liegen; man kann die Carbonsäuren jedoch auch als freie Säuren zufügen und dann mit Alkalimetallhydroxid, Ammoniak oder Aminen neutralisieren und den gewünschten pH-Bereich einstellen.

Die eingesetzten Dicarbonsäuren liegen vorzugsweise (vollständig oder überwiegend) als Dikaliumsalze in den erfindungsgemäßen Gefrierschutzmittelkonzentraten vor, was in einer optimalen Alkalitätsreserve der Formulierung resultiert. Man gibt entweder die betreffenden Säuren direkt als Dikaliumsalze zu oder neutralisiert die freien Dicarbonsäuren in der Formulierung mit Kaliumhydroxid. Bei Einsatz einer Mischung aus Bernsteinsäure und Sebacinsäure können beide als Dikaliumsalze oder die Bernsteinsäure als Dikaliumsalz und die Sebacinsäure als Dinatriumsalz vorliegen. Je nach eingesetzter Dicarbonsäure und pH-Wert können noch untergeordnete Mengen an den jeweiligen sauren Monoalkalimetall-hydrogensalzen vorhanden sein, insbesondere bei Verwendung von Natriumhydroxid als Neutralisationsmittel.

Als flüssigalkoholisches Gefrierpunktserniedrigungsmittel, welches normalerweise den Hauptbestandteil (in der Regel mindestens 75 Gew.-%, insbesondere mindestens 85 Gew.-%) der erfindungsgemäßen Gefrierschutzmittelkonzentrate ausmacht, eignen sich Alkylenglykole und deren Derivate, insbesondere Propylenglykol und vor allem Ethylenglykol. Daneben kommen jedoch auch noch höhere Glykole und Glykolether in Betracht, z. B. Diethylenglykol, Dipropylenglykol sowie Monoether von Glykolen wie der Methyl-, Ethyl-, Propyl- und Butylether von Ethylenglykol, Propylenglykol, Diethylenglykol und Dipropylenglykol. Es können auch Mischungen der genannten Glykole und Glykolether verwendet werden.

In einer bevorzugten Ausführungsform basieren die erfindungsgemäßen Gefrierschutzmittelkonzentrate auf Ethylenglykol oder Mischungen von Alkylenglykolen, die mindestens 95 Gew.-% Ethylenglykol enthalten.

Als weitere übliche Hilfsmittel können die erfindungsgemäßen Gefrierschutzmittelkonzentrate in üblichen geringen Mengen noch Entschäumer (in Regel in Mengen von 0,003 bis 0,008 Gew.-%), Farbstoffe sowie Bitterstoffe aus Gründen der Hygiene und der Sicherheit im Falle eines Verschluckens (z. B. vom Typ Denationiumbenzoat) enthalten.

Die Herstellung der erfindungsgemäßen Gefrierschutzmittelkonzentrate kann durch Zusammenmischen der angegebenen Komponenten im Prinzip in beliebiger Reihenfolge geschehen. Bei einer typischen Herstellweise löst man zu Anfang das Neutralisationsmittel, insbesondere Natriumhydroxid oder Kaliumhydroxid, in einem Teil, beispielsweise der Hälfte, der gesamten Alkylenglykol-Menge auf. Danach gibt man die beiden Dicarbonsäuren in freier Form, beispielsweise zuerst Bernsteinsäure und anschließend Sebacinsäure, zu. Nachdem diese klar und ohne Rückstand gelöst sind, wird das restliche Alkylenglykol zugegeben. Die restlichen Komponenten werden entweder zum Schluß oder zusammen mit den Dicarbonsäuren in die Formulierung eingearbeitet.

Besonders bevorzugte erfindungsgemäße Gefrierschutzmittelkonzentrate sind wie folgt zusammengesetzt:
0,5 bis 3 Gew.-%, insbesondere 1,5 bis 2 Gew.-% Bernsteinsäure
0,5 bis 3 Gew.-%, insbesondere 1,5 bis 2 Gew.-% Sebacinsäure
0,05 bis 1 Gew.-%, insbesondere 0,1 bis 0,5 Gew.-% Natrium- oder Kaliummolybdat
0,05 bis 0,5 Gew.-%, insbesondere 0,05 bis 0,25 Gew.-% Benzotriazol
0,05 bis 0,5 Gew.-%, insbesondere 0,05 bis 0,25 Gew.-% Tolutriazol
0,1 bis 2 Gew.-%, insbesondere 0,2 bis 1 Gew.-% Benzoesäure
0 bis 5 Gew.-%, insbesondere 0,1 bis 2 Gew.-% entmineralisiertes Wasser
entsprechende Mengen Natrium- oder Kaliumhydroxid zur Einstellung des pH-Bereiches auf 7,5 bis 9
als Rest zu 100 Gew.-% Monoethylenglykol oder eine mindestens 85 Gew.-% Monoethylenglykol enthaltende Mischung aus Alkylenglykolen

Gegenstand der vorliegenden Erfindung sind auch gebrauchsfertige wäßrige Kühlmittelzusammensetzungen mit einem erniedrigten Gefrierpunkt, insbesondere für den Kühlerschutz im Automobilbereich, welche Wasser und 10 bis 90 Gew.-%, insbesondere 20 bis 60 Gew.-% der erfindungsgemäßen Gefrierschutzmittelkonzentrate umfassen.

Die erfindungsgemäßen Gefrierschutzmittelkonzentrate zeichnen sich durch eine effektive Korrosionsinhibierung der eingangs aufgezählten Metalle bzw. Legierungen aus. Sie sind ebenfalls gut verträglich mit weiteren Werkstoffen wie Kautschuken, Kunststoffen, Leimfugen, Fiber- und Gummidichtungen und ähnlichen Materialien, die in Anlagen bzw. Verbrennungsmotoren vorkommen können, und zeigen in elektrochemischen Korrosionsversuchen gute Ergebnisse.

Vor allem zeichnen sich die erfindungsgemäßen Gefrierschutzmittelkonzentrate jedoch durch eine verbesserte Hochtemperatur-Stabilität gegenüber den Mitteln des Standes der Technik aus. Bei Temperaturen von 160°C und darüber bleiben die Systeme stabil und liefern reproduzierbare Testergebnisse, beispielsweise bei 175°C.

Die nachfolgenden Beispiele sollen die Erfindung erläutern, ohne sie jedoch zu beschränken.

### Beispiele

Als erfindungsgemäßes Gefrierschutzmittelkonzentrat wurde die unten in Tabelle 1 aufgeführte Kühlerschutzkonzentrat-Formulierung A und als Vergleichs-Formulierung B eine zu Beispiel 1 der EP-B 552 988 (1) analoge Formulierung verwendet.

**Tabelle 1:**

| Zusammensetzungen der Gefrierschutzmittelkonzentrate [Gew.-%] | | |
|---|---|---|
| | Formulierung A | Formulierung B |
| Monoethylenglykol | 91,80 | 93,96 |
| Wasser | 0,75 | 0,47 |
| Bernsteinsäure | 1,82 | - |
| Sebacinsäure | 1,82 | 1,50 |
| Itaconsäure | - | 0,70 |
| Natriummolybdat-Dihydrat | 0,20 | 0,90 |
| Benzotriazol | 0,15 | - |
| Tolutriazol | 0,10 | 0,10 |
| Natriumbenzoat | 0,40 | - |
| Kaliumhydroxid | 2,96 | - |
| Natriumhydroxid (50 gew.-%ig) | - | 2,06 |
| Magnesiumnitrat-Hexahydrat | - | 0,30 |
| üblicher Hartwasserstabilisator (Bayhibit AM) | - | 0,01 |

Formulierungen A und B wurden in wäßriger Verdünnung einem üblichen Korrosionsversuch und einem Hochtemperatur-Stabilitätstest unterzogen.

Die Ergebnisse im Korrosionsversuch nach ASTM D 1384 sind in Tabelle 2 widergegeben. Sie belegen, daß die erfindungsgemäße Formulierung A eine genau so gute Schutzwirkung bei Buntmetallen wie Kupfer und Messing sowie bei Nicht-Buntmetallen wie Weichlot, Stahl, Grauguß und Gußaluminium wie die Vergleichsformulierung B hat und praktisch in keinem Fall ein Materialabtrag erfolgt ist.

**Tabelle 2:**

| Glassware-Korrosionsversuche nach ASTM D 1384 | | |
|---|---|---|
| | Formulierung A | Formulierung B |
| Prüfkörper | Gewichtsänderung [mg/cm²] | Gewichtsänderung [mg/cm²] |
| Kupfer | -0,01 | +0,01 |
| Weichlot | 0 | +0,02 |
| Messing | -0,01 | +0,01 |
| Stahl | 0 | +0,02 |
| Grauguß | +0,06 | +0,09 |
| Gußaluminium | +0,06 | +0,04 |

Die Konzentration betrug bei diesen Korrosionsversuchen für beide Formulierungen jeweils 33 Vol.-% in Wasser.

Bei Hochtemperatur-Stabilitätstests für Kühlerschutzmittel ("Tenue en Temperature d'un Liquide de Refroidissement") gemäß PSA-Norm D 55 5345 (vergleichbar mit Experimental Test Method CEC C-14-X-99 vom 18.03.1999) wird der Einfluß der Temperatur auf die pH-Stabilität und den Druck bestimmt. Je stärker diese beiden Parameter ansteigen, desto stärker findet auch eine Zersetzung der in der Kühlerschutzmittel-Formulierung enthaltenen Korrosionsinhibitoren statt.

Zu diesem Zweck wurden 660 ml der auf 33 Vol.-% in Wasser verdünnten Kühlerschutzkonzentrat-Formulierung A bzw. B in einen geschlossenen Druckbehälter aus Aluminium gefüllt, in dem sich noch als zweites Metall ein Ring aus Gußeisen befand, und bei 175°C für 192 Stunden unter Rühren belassen. In bestimmten Zeitabständen wurde der Druck gemessen und an entnommenen Proben der pH-Wert bestimmt. Nach dem Ende des Tests wurde zusätzlich visuell beurteilt, ob an den Metalloberflächen Ablagerungen oder Korrosion aufgetreten war. Nach 24 Stunden nach Abschluß des Tests wurde außerdem das Volumen des Rückstandes in der Flüssigkeit bestimmt.

Die Ergebnisse dieses Hochtemperatur-Stabilitätstests sind in Tabelle 3 aufgeführt. Während bei Verwendung der erfindungsgemäßen Formulierung A der pH-Wert und der Druck praktisch konstant blieben, fand bei Verwendung der Vergleichs-Formulierung B bei beiden Parametern eine deutliche Erhöhung statt und auf der Aluminiumoberfläche bildete sich ein Niederschlag, gleichzeitig wurde hier auch ein erheblich höherer Rückstand in der Versuchsflüssigkeit gefunden.

**Tabelle 3:**

| Hochtemperatur-Stabilitätstest nach PSA-Norm D 55 5345 | | | | |
|---|---|---|---|---|
| | Formulierung A | | Formulierung B | |
| Laufzeit [h] | pH-Wert | Druck [bar] | ph-Wert | Druck [bar] |
| 0 | 7,90 | 7,0 | 8,03 | 6,8 |
| 8 | 7,64 | 7,0 | 6,85 | 6,8 |
| 24 | 7,59 | 7,1 | 6,92 | 6,9 |
| 48 | 7,57 | 7,2 | 8,66 | 7,0 |
| 72 | 7,58 | 7,2 | 9,52 | 7,2 |
| 144 | 7,96 | 7,4 | 10,32 | 8,0 |
| 192 | 8,20 | 7,5 | 10,40 | 9,5 |

| Optische Bewertung: | | |
|---|---|---|
| Aluminium | kein Belag | weißer Belag |
| Gußeisen | kein Belag | kein Belag |
| | | |
| Volumen des Rückstandes | 3 ml | 7 ml |

Diese Resultate belegen, daß die erfindungsgemäßen Gefrierschutzmittelkonzentrate gegenüber dem Stand der Technik bei gleich guter Korrosionsschutzwirkung eine deutlich verbesserte Hochtemperaturstabilität aufweisen.

## Patentansprüche

1. Gefrierschutzmittelkonzentrate auf Basis von Alkylenglykolen oder deren Derivaten, enthaltend
(a) 0,05 bis 10 Gew.-%, bezogen auf die Gesamtmenge des Konzentrates, einer Mischung aus mindestens zwei verschiedenen Dicarbonsäuren mit jeweils 3 bis 16 C-Atomen in Form deren Alkalimetall-, Ammonium- oder substituierten Ammoniumsalze oder, für den Fall einer Mischung aus zwei verschiedenen gesättigten aliphatischen Dicarbonsäuren mit jeweils 3 bis 16 C-Atomen, deren Imide,
(b) 0,01 bis 5 Gew.-%, bezogen auf die Gesamtmenge des Konzentrates, eines oder mehrerer Alkalimetall-, Ammoniumoder substituierter Ammoniummolybdate und
(c) 0,01 bis 3 Gew.-%, bezogen auf die Gesamtmenge des Konzentrates, einer Mischung aus zwei verschiedenen Korrosionsinhibitoren ausgewählt aus der Gruppe der Kohlenwasserstofftriazole.

2. Gefrierschutzmittelkonzentrate nach Anspruch 1, bei denen die Komponente (a) eine Mischung aus zwei verschiedenen gesättigten aliphatischen Dicarbonsäuren mit jeweils 3 bis 16 C-Atomen, vorzugsweise mit jeweils 4 bis 12 C-Atomen, darstellt.

3. Gefrierschutzmittelkonzentrate nach Anspruch 1 oder 2, enthaltend zusätzlich
(d) 0,05 bis 5 Gew.-%, bezogen auf die Gesamtmenge des Konzentrates, einer oder mehrerer aliphatische oder aromatische Monocarbonsäuren mit jeweils 5 bis 18 C-Atomen in Form deren Alkalimetall-, Ammonium- oder substituierten Ammoniumsalze.

4. Gefrierschutzmittelkonzentrate nach den Ansprüchen 1 bis 3, enthaltend zusätzlich einen oder mehrere Korrosionsinhibitoren ausgewählt aus der Gruppe der Alkalimetallborate, Alkalimetallphosphate, Alkalimetallsilikate, Alkalimetallnitrite, Alkalimetallnitrate und des Magnesiumnitrates in Mengen von jeweils bis zu 1 Gew.-%, bezogen auf die Gesamtmenge des Konzentrates.

5. Gefrierschutzmittelkonzentrate nach den Ansprüchen 1 bis 4, enthaltend zusätzlich bis zu 1 Gew.-%, bezogen auf die Gesamtmenge des Konzentrates, Hartwasserstabilisatoren auf Basis von Polyacrylsäure, Polymaleinsäure, Acrylsäure-Maleinsäure-Copolymeren, Polyvinylpyrrolidon, Polyvinylimidazol, Vinylpyrrolidon-Vinylimidazol-Copolymeren und/oder Copolymeren aus ungesättigten Carbonsäuren und Olefinen.

6. Gefrierschutzmittelkonzentrate nach den Ansprüchen 1 bis 5 mit einem pH-Wert im Bereich von 6 bis 11.

7. Gefrierschutzmittelkonzentrate nach den Ansprüchen 1 bis 6 auf der Basis von Ethylenglykol oder Mischungen von Alkylenglykolen, die mindestens 95 Gew.-% Ethylenglykol enthalten.

8. Gebrauchsfertige wäßrige Kühlmittelzusammensetzungen mit einem erniedrigten Gefrierpunkt, welche Wasser und 10 bis 90 Gew.-% eines Gefrierschutzmittelkonzentrates gemäß den Ansprüchen 1 bis 7 umfassen.

## Claims

1. An antifreeze concentrate based on alkylene glycols or their derivatives, comprising
a) from 0.05 to 10% by weight, based on the total weight of the concentrate, of a mixture of at least two different dicarboxylic acids each having from 3 to 16 carbon atoms in the form of their alkali metal, ammonium or substituted ammonium salts or, in the case of a mixture of two different saturated aliphatic dicarboxylic acids each having from 3 to 16 carbon atoms, their imides
b) from 0.01 to 5% by weight, based on the total weight of the concentrate, of one or more alkali metal, ammonium or substituted ammonium molybdates and
c) from 0.01 to 3% by weight, based on the total weight of the concentrate, of a mixture of two different corrosion inhibitors selected from the group consisting of hydrocarbon triazoles.

2. An antifreeze concentrate as claimed in claim 1 in which the component (a) is a mixture of two different saturated aliphatic dicarboxylic acids each having from 3 to 16 carbon atoms, preferably each having from 4 to 12 carbon atoms.

3. An antifreeze concentrate as claimed in claim 1 or 2 which further comprises
d) from 0.05 to 5% by weight, based on the total weight of the concentrate, of one or more aliphatic or aromatic monocarboxylic acids each having from 5 to 18 carbon atoms in the form of their alkali metal, ammonium or substituted ammonium salts.

4. An antifreeze concentrate as claimed in any of claims 1 to 3 which further comprises one or more corrosion inhibitors selected from the group consisting of alkali metal borates, alkali metal phosphates, alkali metal silicates, alkali metal nitrites, alkali metal nitrates and magnesium nitrate in amounts of in each case up to 1% by weight, based on the total weight of the concentrate.

5. An antifreeze concentrate as claimed in any of claims 1 to 4 which further comprises up to 1% by weight, based on the total weight of the concentrate, of hard water stabilizers based on polyacrylic acid, polymaleic acid, acrylic acid-maleic acid copolymers, polyvinylpyrrolidone, polyvinylimidazole, vinylpyrrolidone-vinylimidazole copolymers and/or copolymers of unsaturated carboxylic acids and olefins.

6. An antifreeze concentrate as claimed in any of claims 1 to 5 having a pH in the range from 6 to 11.

7. An antifreeze concentrate as claimed in any of claims 1 to 6 based on ethylene glycol or mixtures of alkylene glycols containing at least 95% by weight of ethylene glycol.

8. A ready-to-use aqueous coolant composition having a depressed freezing point which comprises water and from 10 to 90% by weight of an antifreeze concentrate as claimed in any of claims 1 to 7.

## Revendications

1. Concentrés de produit antigel à base d'alkylèneglycols ou de leurs dérivés, contenant :
(a) 0,05 à 10% en poids, par rapport à la quantité totale du concentré, d'un mélange d'au moins deux acides dicarboxyliques différents comportant chacun 3 à 16 atomes de C sous la forme de leurs sels de métal alcalin, d'ammonium ou d'ammonium substitué ou, dans le cas d'un mélange de deux acides dicarboxyliques aliphatiques saturés différents comportant chacun 3 à 16 atomes de C, de leurs imides,
(b) 0,01 à 5% en poids, par rapport à la quantité totale du concentré, d'un ou de plusieurs molybdates de métal alcalin, d'ammonium ou d'ammonium substitué, et
(c) 0,01 à 3% en poids, par rapport à la quantité totale du concentré, d'un mélange de deux inhibiteurs de corrosion différents choisis parmi le groupe des triazoles d'hydrocarbure.

2. Concentrés de produit antigel suivant la revendication 1, dans lesquels le composant (a) représente un mélange de deux acides dicarboxyliques aliphatiques saturés différents comportant chacun 3 à 16 atomes de C, de préférence 4 à 12 atomes de C.

3. Concentrés de produit antigel suivant l'une des revendications 1 et 2, contenant en supplément :
(d) 0,05 à 5% en poids, par rapport à la quantité totale du concentré, d'un ou de plusieurs acides monocarboxyliques aliphatiques ou aromatiques comportant chacun 5 à 18 atomes de C sous la forme de leurs sels de métal alcalin, d'ammonium ou d'ammonium substitué.

4. Concentrés de produit antigel suivant les revendications 1 à 3, contenant en supplément un ou plusieurs inhibiteurs de corrosion choisis parmi le groupe des borates de métal alcalin, des phosphates de métal alcalin, des silicates de métal alcalin, des nitrites de métal alcalin, des nitrates de métal alcalin et du nitrate de magnésium, en des quantités allant chaque fois jusqu'à 1% en poids, par rapport à la quantité totale du concentré.

5. Concentrés de produit antigel suivant les revendications 1 à 4, contenant en supplément jusqu'à 1% en poids, par rapport à la quantité totale du concentré, d'agents de stabilisation d'eau dure à base d'acide polyacrylique, d'acide polymaléique, de copolymères d'acide acrylique-acide maléique, de polyvinylpyrrolidone, de polyvinylimidazole, de copolymères de vinylpyrrolidone-vinylimidazole et/ou de copolymères d'acides carboxyliques insaturés et d'oléfines.

6. Concentrés de produit antigel suivant les revendications 1 à 5, présentant une valeur de pH de l'ordre de 6 à 11.

7. Concentrés de produit antigel suivant les revendications 1 à 6, à base d'éthylèneglycol ou de mélanges d'alkylèneglycols qui contiennent au moins 95% en poids d'éthylèneglycol.

8. Compositions aqueuses de produit réfrigérant prêtes à l'usage, présentant un point de congélation abaissé et comportant de l'eau et 10 à 90% en poids d'un concentré de produit antigel suivant les revendications 1 à 7.
